# EUROPEAN PATENT APPLICATION

(11) **EP 0 984 612 A1**
(43) Date of publication of application: **08.03.2000**
(21) Application number: 99912052.0
(22) Date of filing: 31.03.1999
(51) Int. Cl.: H04M 19/08, H04M 11/00

(54) **DSL MODEM**

(30) Priority: 31.03.1998 JP 8536398
(71) Applicant: JAPAN AVIATION ELECTRONICS INDUSTRY, LIMITED, Shibuya-ku, Tokyo 150-0043 (JP)
(72) Inventor: ANDOU, Norihiro-Japan Aviation Elect. Indust. Lim., Tokyo150-0043 (JP); ISHIGAMI, Motohiro-Japan Aviation Elect. Ind. Lim., Tokyo 150-0043 (JP)
(74) Representative: Hoffmann, Eckart, Dipl.-Ing.
(86) International application number: JP9901651
(87) International publication number: WO9952268

(57) **Abstract**

A POTS splitter 11 effects a branching/coupling of a POTS signal and a DSL (high speed digital communication) signal, and has a DSL terminal, to which a DSL modulator/demodulator unit 14 is connected. An exchange 21 in a communication service station 20 supplies to a terminal a POTS signal Sa, which is converted by a DC converter 15 into a direct current voltage to be fed as an operating power source for the DSL modulator/demodulator unit 4, thus realizing a DSL (Digital Subscriber Line) modem which is capable of operation even during a power outage without the provision of a reserve power supply. A switch 16 may be provided to change between a POTS instrument and the DC converter 15 for connection with the POTS splitter 11.

## Description

### TECHNICAL FIELD

The present invention relates to a DSL modem employing a POTS splitter.

### PRIOR ART

POTS (Plain Old Telephone Service; existing telephone service) represents an existing telephone service using an analog signal in an audio band, which signal will be hereafter referred to as POTS signal or audio band signal. DSL (Digital Subscriber Line; digital subscriber line) generically refers to a communication technology which uses an existing telephone line or the like to provide a high speed digital communication, includes ADSL, VDSL and the like, and such a signal will be hereafter referred to as DSL signal high speed digital communication signal.

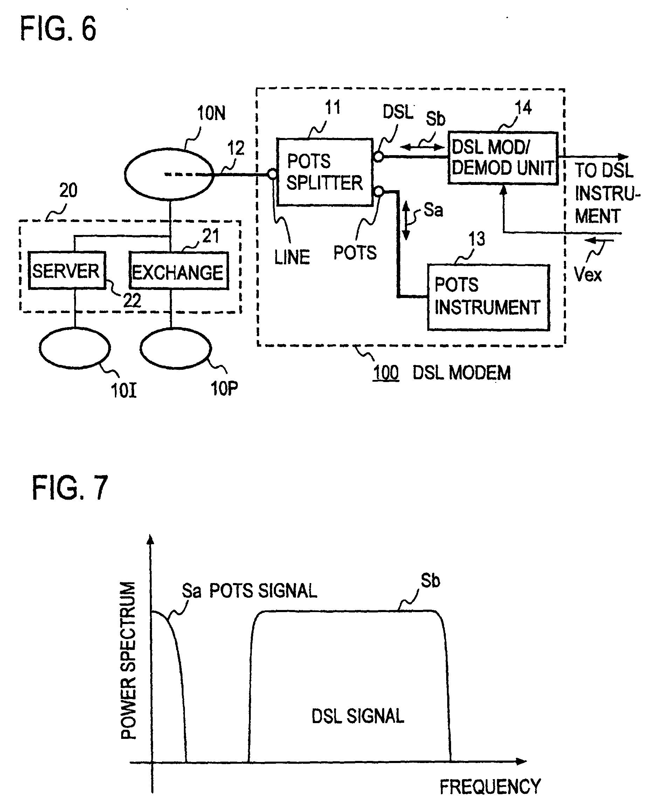

As shown in Fig. 6, a DSL modem 100 employing a POTS splitter is connected to a telephone switched network 12, which may be contained in a telephone switched network 10N, for example, which forms a subscriber network. The switched network 10N is connected to a communication service station 20, and additionally analogically connected to a public switched telephone network 10P through an in-house exchange or digitally connected to an internet 10I through a server 22. A POTS splitter 11 is connected to the terminal of the telephone line 12 to serve a branching/coupling of POTS signal Sa and DSL signal Sb which are received from or are to be transmitted to the telephone line 12. A POTS instrument (such as a telephone set) 13 is connected to the POTS terminal of the POTS splitter 1. A DSL modulator/demodulator unit 14 has a line side which is connected to the DSL terminal of the POTS splitter 11 and a data input/output side (modem interface side) which is connected to a DSL instrument, not shown (which may comprise an information terminal unit such as a personal computer, for example). A branching between the POTS signal and the DSL signal by the POTS splitter 11 allows a simultaneous communication using the both signals.

The POTS splitter 11 is a circuitry which effects a branching/coupling of the POTS signal Sa having an audio frequency band substantially extending from 0 to 4 KHz and the DSL signal (high speed digital communication signal) having a higher frequency band as illustrated in Fig. 7, and may be constructed using passive elements such as LC elements. Thus, no power supply is required. When the POTS instrument 13 is a usual telephone set, the latter is enabled for operation by being fed with a d.c. power which is supplied from the exchange side through the telephone line of a d.c. loop with the exchange 21 which is formed in response to off-book of the handset. It is to be noted that the DSL modulator/demodulator unit 14 operates on an external power supply Vex.
(a) Because the DSL modulator/demodulator unit 14 must be fed from the external power supply Vex, the conventional DSL modem suffers from an inconvenience that a reserve power supply must be provided to guard against a power outage which may occur in the event of a disaster.
(b) It also suffers from an inconvenience that a storage battery must be provided for its use where no power outlet connector is available.
(c) While it may be contemplated that the DSL instrument be provided with a reserve power supply (for example, an internal storage battery) so that the latter may feed the DSL modem in the event of power outage, this implementation involves difficulty in view of the limited capacity of the internal storage battery where the DSL instrument is of a reduced size and of a portable type.

It is an object of the present invention to overcome above problems of the prior art by realizing a DSL modem which is not provided with a reserve power supply, but which is not disabled by a disaster, retaining the capability to operate during the power outage.

### DISCLOSURE OF THE INVENTION

A DSL modem according to the invention comprises a POTS splitter connected to a terminal of a telephone line for effecting a branching/coupling of an existing telephone service signal (POTS signal) and a high speed digital communication signal (DSL signal), a DSL modulator/demodulator unit connected to a DSL terminal of the POTS splitter, and a DC converter connected to a POTS terminal of the POTS splitter for converting a POTS signal in an audio band which is transmitted from a communication service station into a given direct current voltage to feed it as an operating power source to the DSL modulator/demodulator unit.

The modem may additionally comprise a POTS instrument and a switch which changes between the POTS instrument and the DC converter for connection with the POTS terminal of the POTS splitter.

Furthermore, a second switch may be provided to change between an output from the DC converter and an external power supply to feed the DSL modulator/demodulator unit.

In addition, a power outage detector may be provided which detects a power outage of the external power supply to apply a detection signal to the second switch for causing the latter to select an output from the DC converter.

Alternatively, a power outage information generator may provided which applies a power outage information, which is to be transmitted to a mating DSL instrument, to the DSL modulator/demodulator unit in response to the occurrence of a detection signal from the power outage detector.

The modem may also employ the POTS signal in the form of a mono-frequency or a multi-frequency signal in an audio band.

### BRIEF DESCRIPTION OF THE DRAWINGS

Fig. 1 is a block diagram of an embodiment of a DSL modem according to the invention;
Fig. 2 is a block diagram of a modification of the embodiment shown in Fig. 1;
Fig. 3 is a block diagram of another modification of the embodiment shown in Fig. 2;
Fig. 4 is a block diagram of a further modification of the embodiment shown in Fig. 3;
Fig. 5 is a block diagram of still another modification of the embodiment shown in Fig. 4;
Fig. 6 is a block diagram of a conventional DSL modem; and
Fig. 7 is a diagram illustrating the frequency distributions of POTS signal Sa and DSL signal Sb shown in Fig. 6.

### BEST MODES FOR CARRYING OUT THE INVENTION

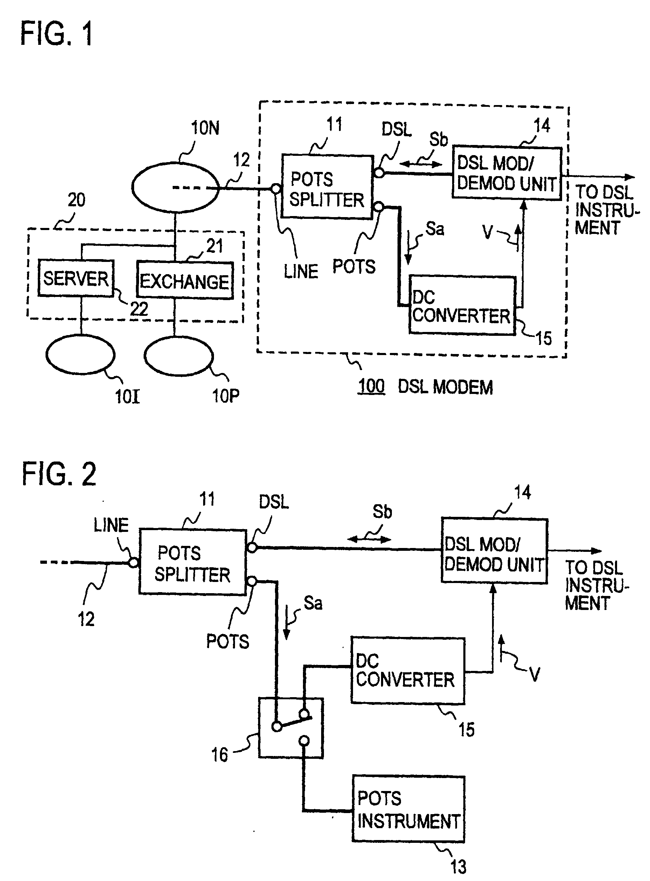

Embodiments of the invention are illustrated in Figs. 1 to 5, with parts corresponding to those shown in Fig. 6 being designated by like numerals and characters as used before.

### Embodiment 1

Fig. 1 shows an embodiment of DSL modem 100 according to the invention. A POTS splitter 11 is connected to a terminal of a telephone line 12 for effecting a coupling/branching of a POTS signal and a DSL signal. A DSL modulator/demodulator unit 14 is connected to a DSL terminal of the POTS splitter 1 for demodulating a DSL modulation signal Sb which is transmitted from a mating modem into a baseband digital signal and/or for modulating a digital signal into DSL modulation signal Sb for transmission. The embodiment is shown for a situation when a POTS instrument such as a telephone set (corresponding to POTS instrument 13 shown in Fig. 6) is not provided, and in place of a POTS instrument, a DC converter 15 is connected to a POTS terminal of the POTS splitter 11 for converting a POTS signal Sa which is transmitted from a communication service station 20 through a telephone switched network 10N into a desired direct current voltage to feed it as an operating power source to the DSL modulator/demodulator unit 14.

An exchange 21 generates a variety of audio signals in the band of POTS signal Sa shown in Fig. 7 for delivery to POTS instrument. For example, according to the Japanese standard, the exchange generates control signals including 400 Hz dial tone signal, altering signal and the like, which signals are transmitted to a telephone set. A direct current power for operating the telephone set is also fed from the exchange. The dial tone signal is conveyed from the exchange 21 on a direct current loop which is formed in response to off-hook of the handset. In accordance with the invention, such POTS signal (either direct current power or audio signal) from the communication service station 20 is utilized as a power source for the DSL modulator/demodulator unit 14 during the power outage. When utilizing the direct current power from the exchange 21, the direct current voltage is converted by the DC converter 15 into a direct current voltage which is required by the DSL modulator/demodulator unit 14 to feed it. When utilizing the dial tone signal, which is a control signal from the exchange 21, the control signal is rectified, smoothed and converted into a necessary DC voltage by the DC converter 15 to be applied to the DSL modulator/demodulator unit 14.

The exchange 21 may also generate a mono-frequency or a multi-frequency signal in the band of the POTS signal, which is separate from the dial tone, for purpose of power supply to feed a connected DSL modem 100. Alternatively, a server 20 may generate a similar POTS signal for power supply to feed a connected DSL modem 100. In either instance, a signal which is utilized within the DC converter 15 to provide a power is a signal within the band of the POTS signal, and accordingly, in the description to follow, a DC power or audio signal from the communication service station 20 which is utilized as a power source for the DSL modulator/demodulator unit 14 will be referred to as a power source POTS signal and denoted by Sa.

In the DSL modem 100 shown in Fig. 1, even though the use of the POTS instrument such as a telephone set is prohibited, the direct current power or POTS signal Sa in the form of an audio signal which is supplied from the communication service station 20 acting as an access point can be utilized as a power source of the DSL modulator/demodulator unit 14 even during the power outage, and accordingly, the DSL modulator/demodulator unit 14 can be connected through the server 22 to an internet 10I, for example, enabling data downloading or uploading operation in terms of a high speed digital communication signal (DSL signal) Sb.

### Embodiment 2

In an embodiment shown in Fig. 2, a POTS instrument 13 and a switch 16 are added to the modem shown in Fig. 1. The switch 16 changes between the POTS instrument 13 and the DC converter 15 for connection with the POTS terminal of the POTS splitter 11. In this manner, when a communication using the DSL signal Sb is to be performed, the power source POTS signal Sa is converted into a given voltage V by the DC converter 15 to be fed as an operating power source to the DSL modulator/demodulator unit 14. When a communication which uses the DSL signal does not take place, a communication in terms of POTS signal Sa in the audio band is permitted using the POTS instrument 13 such as a telephone set, facsimile or the like.

### Embodiment 3

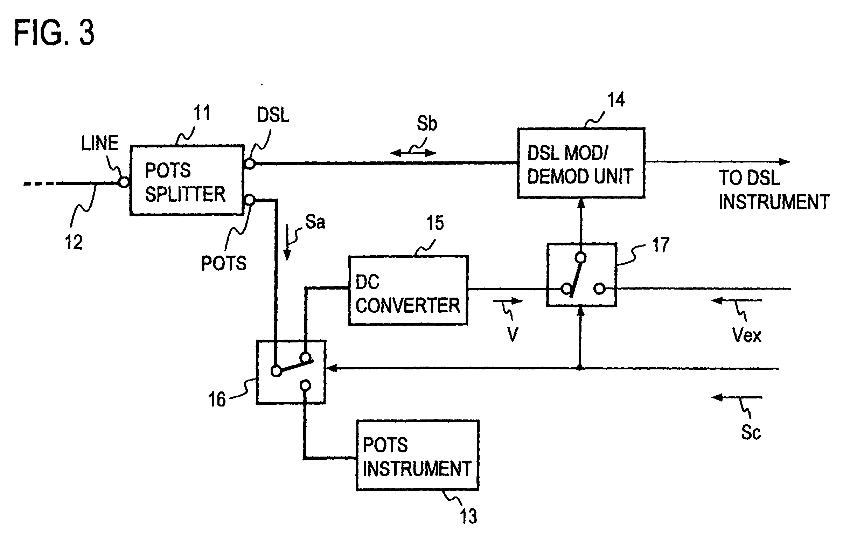

In an embodiment shown in Fig. 3, a second switch 7 which changes between an output V from the DC converter 15 and an external power supply voltage Vex to feed the DSL modulator/demodulator unit 14 is added to the DSL modem 100 shown in Fig. 2. Normally, a power supply voltage Vex from a storage battery, not shown, acting as an external power supply, an AC adapter or a connected information terminal unit is fed through the switch 17 to the DSL modulator/demodulator unit 14, and in this manner, an intended communication system which permits a POTS communication and the DSL communication simultaneously can be constructed during the normal time when the power outage does not occur. A switching signal Sc permits either power supply to be used conveniently. During the power outage, a DSL communication which utilizes the POTS signal Sa as a power source for the DSL modulator/demodulator unit 14 or an audio band communication in terms of the POTS signal Sa can be selected.

### Embodiment 4

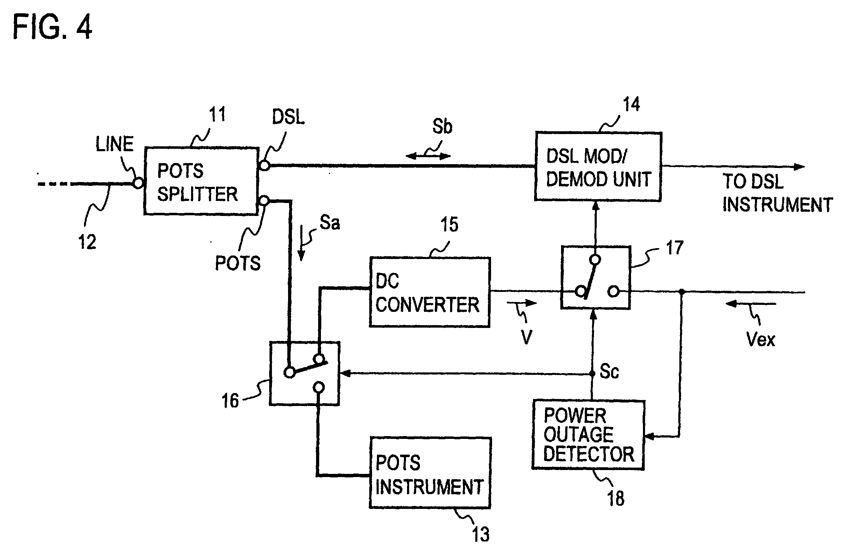

In an embodiment shown in Fig. 4, a power outage detector 18 is added to the DSL modem 100 shown in Fig. 3. Normally, the modem operates on the supply voltage Vex from an external power supply. During the power outage, the power outage detector 18 detects the power outage of the external supply, and applies a detection signal Sc to the second switch 17, thus causing it to select an output V from the DC converter 15. It should be understood that at least during the power outage, the power source POTS signal Sa is supplied from the communication service station 20 to the modem. The switch 16 may be manually controlled rather than by the detection signal Sc.

### Embodiment 5

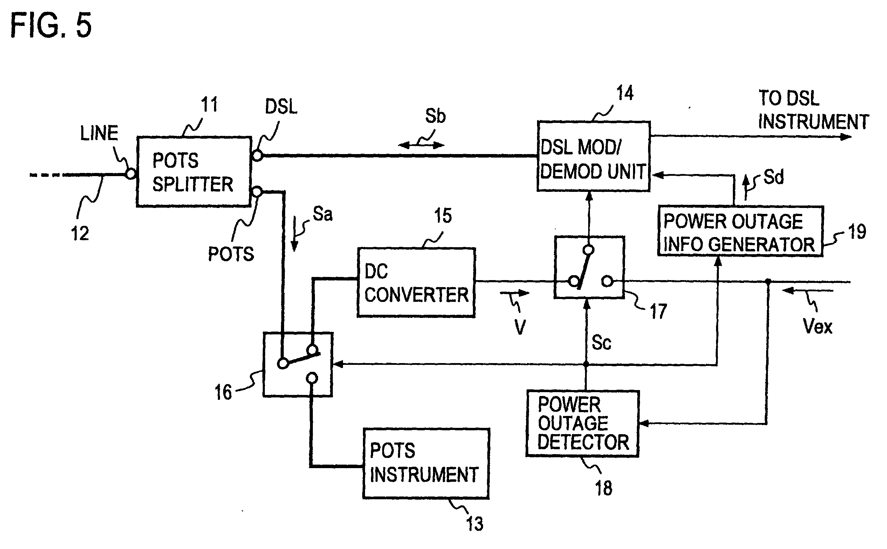

In an embodiment shown in Fig. 5, a power outage information generator 19 is added to the DSL modem 100 shown in Fig. 4. Whenever the detection signal Sc is generated by the power outage detector 18, it is applied to the switches 16 and 17, operating them to be connected to the DC converter 15 and the DSL modulator/demodulator unit 14, respectively, and is also applied to the power outage information generator 19. In response to the detection signal Sc, the power outage information generator 19 supplies a power outage information Sd, which is to be transferred to a mating DSL instrument, to the DSL modulator/demodulator unit 14. This allows the mating instrument to recognize that its mate is suffering from the power outage, and to take a suitable measure such as terminating the data communication within 30 minutes, for example, in consideration of the capacity of the reserve power supply (such as storage battery).

As mentioned above, in accordance with the invention, the POTS signal Sa which is supplied from the communication service station 20 to a terminal may comprise a direct current power or a 400 Hz dial tone signal, for example, but it is also possible that the exchange 21 or the server 22 may generate an arbitrary mono-frequency or multi-frequency signal within an audio band for purpose of power supply to feed the modem. Because such signals are very common, they can be generated in a simple manner

### EFFECTS OF THE INVENTION

The DSL modem according to the invention permits the POTS signal Sa which is supplied from the communication service station to be used as an operating power source by converting it into a given direct current voltage, and thus is enabled to operate even during the power outage without the provision of a reserve power supply, which provides a particular advantage in the event of a disaster.

## Claims

1. A DSL modem comprising
a POTS splitter connected to a terminal of a telephone line for effecting a branching/coupling of an existing telephone service signal or POTS signal and a high speed digital communication signal or DSL signal;
a DSL modulator/demodulator unit connected to a DSL terminal of the POTS splitter;
and a DC converter connected to a POTS terminal of the POTS splitter for converting a power source POTS signal which is supplied from a communication service station into a given direct current voltage to feed it as an operating power source to the DSL modulator/demodulator unit.

2. A DSL modem according to Claim 1, further comprising a POTS instrument, and a switch for changing between the POTS instrument and the DC converter for connection with the POTS terminal of the POTS splitter.

3. A DSL modem according to Claim 2, further comprising a second switch for changing between an output from the DC converter and an external power supply to feed the DSL modulator/demodulator unit.

4. A DSL modem according to Claim 3, further comprising a power outage detector for detecting a power outage of the external power supply and generating a detection signal which is applied to the second switch, causing it to select an output from the DC converter.

5. A DSL modem according to Claim 4, further comprising a power outage information generator which supplies a power outage information which is to be transferred to a mating DSL instrument to the DSL modulator/demodulator unit upon occurrence of a detection signal from the power outage detector.

6. A DSL modem according to Claim 1 in which the power source POTS signal is in the form of a mono-frequency or a multi-frequency signal.

7. A DSL modem according to Claim 6 in which the power source POTS signal is a dial tone signal.

8. A DSL modem according to Claim 1 in which the power source POTS signal comprises a direct current power.
